# EUROPÄISCHE PATENTANMELDUNG

(11) **EP 3 656 219 A1**
(43) Veröffentlichungstag der Anmeldung: **27.05.2020**
(21) Anmeldenummer: 19204361.0
(22) Anmeldetag: 21.10.2019
(51) Int. Cl.: A22C 29/02

(54) **VERFAHREN UND VORRICHTUNG ZUM MASCHINELLEN SCHÄLEN VON GLIEDERFÜSSERN, INSBESONDERE KRABBEN**

(30) Priorität: 22.11.2018 DE 102018129442
(71) Anmelder: Klever, Christin, 78136 Schonach im Schwarzwald (DE)
(72) Erfinder: Klever, Christin, 78136 Schonach im Schwarzwald (DE)
(74) Vertreter: Jabbusch, Matthias

(57) **Zusammenfassung**

Die Erfindung betrifft ein Verfahren und eine Vorrichtung zum maschinellen Schälen von Gliederfüßern, insbesondere Krabben, die jeweils einen Körper und eine den Körper umgebende Hülle, insbesondere Cuticular, mit zumindest einer verhärteten Schicht aufweisen. Verfahrensgemäß trennt eine Schäleinrichtung die Hüllen von den Körpern ab. Weiter ist vorgesehen, dass wenigstens ein Schallwandler der Schäleinrichtung ein Schallfeld mit Schalwellen in einem Medium, mit welchem zusammen sich die Gliederfüßer in einem Becken befinden, derart erzeugt, dass mittels der Schallwellen die Hüllen aufgesprengt und von den Körpern abgetrennt werden.

Die Vorrichtung weist die Schäleinrichtung und den wenigstens einen Schallwandler auf.

## Beschreibung

Die Erfindung betrifft ein Verfahren zum maschinellen Schälen von Gliederfüßern nach dem Oberbegriff des Patentanspruches 1 und eine Vorrichtung zum maschinellen Schälen von Gliederfüßern nach dem Oberbegriff des Patentanspruches 12. Insbesondere betrifft die Erfindung ein Verfahren und eine Vorrichtung zum maschinellen Schälen von Krabben. Vorteilhafterweise wird die Erfindung jedoch auch zum Schälen von anderen Krebstieren ("Crustacea") und Insekten eingesetzt. In weiterer Verallgemeinerung betrifft die Erfindung das Schälen von Tieren, die unter dem Begriff "Pancrustacea" zusammengefasst werden, in weiterer Verallgemeinerung das Schälen von Mandibeltieren ("Mandibulata") sowie schließlich verallgemeinert das Schälen von Gliederfüßern ("Arthropoda").

Gliederfüßer weisen einen Körper und eine den Körper umgebende Hülle auf. Die Hülle wird auch "Cuticular" genannt. Die Hülle besteht aus Chitin und mehreren Proteinen und bildet ein Außenskelett, welches von der obersten Zellschicht ("Epidermis") vom Körper nach außen abgeschieden wird. Die den Körper umgebende Hülle ist bei allen Gliederfüßern zumindest teilweise verhärtet, wobei die Hülle zumindest eine verhärtete Schicht aufweist. Die Hülle wird beim Schälen von Krabben vom jeweiligen Körper abgetrennt. Traditionell erfolgt das Schälen von Krabben per Hand und wird dabei auch als "Pulen" bezeichnet. Das Schälen von Hand ist jedoch sehr arbeitsintensiv und wird daher oft in Ländern mit vergleichsweise niedrigen Lohnkosten durchgeführt. So werden frisch gefangene Krabben oft zunächst mit Konservierungsstoffen haltbar gemacht und zum Schälen beispielsweise nach Marokko überführt. Nach dem Schälen werden die Körper wieder zurücktransportiert. Nachteilig sind aus Umweltgründen die langen Transportwege. Nachteilig hieran ist zudem die Konservierung der Krabben, um die Krabben über eine Transportzeit von bis zu mehreren Wochen frisch zu halten.

Als Alternative zum Schälen der Krabben von Hand wurden in der Vergangenheit verschiedene gattungsgemäße Vorrichtungen zum maschinellen Schälen von Krabben entwickelt, welche ein gattungsgemäßes Verfahren durchführen. Dabei weist die Vorrichtung eine Schäleinrichtung auf, welche verfahrensgemäß die Hüllen der Krabben von den Körpern abtrennt. Die mit den bekannten Vorrichtungen durchgeführten Verfahren versuchen dabei in der Regel prinzipiell das Schälen der Krabben von Hand nachzuahmen. Die einzelnen Verfahren unterscheiden sich dabei insbesondere durch die Mittel zum Auftrennen der Hülle voneinander. Bekannte eingesetzte Mittel hierfür sind eine Schleifscheibe, ein Reißhaken, Schälwalzen, feststehende oder rotierende Schälmesser oder Schalenschlitzer. Darüber hinaus wurde das Schälen mittels Druckeinwirkung sowie das Schälen mittels Druckgas vorgeschlagen. Gattungsgemäße Verfahren und Vorrichtungen, welche zum Schälen rotierende Schälmesser verwenden, sind beispielsweise aus den deutschen Patentschriften DE 26 42 315 C2 und DE 24 39 651 C3 bekannt.

Ein Hauptproblem bei bekannten maschinellen Verfahren und Vorrichtungen zum Schälen von Krabben beruht darauf, dass die bekannten Vorrichtungen zwar auf das Schälen einer sogenannten Normkrabbe mit definierten Eigenschaften eingestellt werden können, wobei alle Krabben, deren Eigenschaften weitgehend dieser Normkrabbe entsprechen, sehr gut geschält werden, dass sich die zu schälenden Krabben jedoch tatsächlich in Größe, Krümmung, Panzerhärte, Panzerstärke, Geschlecht und Alter stark voneinander unterscheiden und die bekannten Vorrichtungen zum Schälen von Krabben derartig unterschiedliche Krabben nicht ohne zwischenzeitliche Nachjustierung der Vorrichtung einwandfrei schälen können. Insbesondere kann es vorkommen, dass Schälwerkzeuge in den Körper der Krabbe eindringen und diesen somit beschädigen oder nicht weit genug in die Hülle eindringen und diese Hülle daher nicht oder nur unvollständig vom Körper entfernen.

Daher ist ein aufwendiges Nachsortieren oder Nachschälen erforderlich. Gegebenenfalls ist die Krabbe nach dem Schälen auch nicht mehr für den Verkauf geeignet und muss aussortiert werden. Dies führt zu einer geringen Ausbeute. Um möglichst ähnliche Krabben schälen zu können, ist ein aufwendiges Vorsortieren erforderlich. Zum Nachjustieren der Vorrichtung wird jederzeit ein Mechaniker benötigt. Darüber hinaus werden derartige bekannte Vorrichtungen mechanisch stark beansprucht, erfordern einen hohen Desinfektionsaufwand und einen hohen Reinigungsaufwand. Insbesondere können nämlich Sand, Eier und sonstige Anhaftungen an der Krabbe dazu führen, dass bekannte Vorrichtungen verdrecken. Schäleinrichtungen, wie beispielsweise Messer, müssen somit regelmäßig gesäubert und geschärft werden. Dies kann nur im Stillstand der Vorrichtung erfolgen, was somit zu Ausfallzeiten der Vorrichtung führt.

Trotz des hohen Personaleinsatzes beim händischen Schälen von Krabben ist es daher nicht in jedem Fall wirtschaftlicher, Krabben mit den derzeit bekannten Verfahren und Vorrichtungen zum maschinellen Schälen von Krabben zu schälen. Das maschinelle Schälen von Krabben hat sich daher nicht durchgehend gegenüber dem händischen Schälen von Krabben durchgesetzt.

Der Erfindung liegt die Aufgabe zugrunde, ein Verfahren und eine Vorrichtung zum maschinellen Schälen von Gliederfüßern, insbesondere Krabben, anzugeben, wobei das Schälen der Krabben bei vergleichsweise geringem Personaleinsatz weitgehend störungsfrei erfolgen soll.

Die Erfindung löst diese Aufgabe mit einem Verfahren zum maschinellen Schälen von Gliederfüßern nach dem Patentanspruch 1 und mit einer Vorrichtung zum maschinellen Schälen von Gliederfüßern nach dem Patentanspruch 12. Vorteilhafte Ausführungsformen der Erfindung sind in den Unteransprüchen angegeben.

Bei einem Verfahren zum maschinellen Schälen von Gliederfüßern, insbesondere Krabben, die jeweils einen Körper und eine den Körper umgebende Hülle, insbesondere Cuticular, mit zumindest einer verhärteten Schicht aufweisen, wobei eine Schäleinrichtung die Hüllen von den Körpern abtrennt, ist erfindungsgemäß vorgesehen, dass wenigstens ein Schallwandler der Schäleinrichtung ein Schallfeld mit Schalwellen in einem Medium, mit welchem zusammen sich die Gliederfüßer in einem Becken befinden, derart erzeugt, dass mittels der Schallwellen die Hüllen aufgesprengt und von den Körpern abgetrennt werden.

Bei einer Vorrichtung zum maschinellen Schälen von Gliederfüßern, insbesondere Krabben, die jeweils einen Körper und eine den Körper umgebende Hülle, insbesondere Cuticular, mit zumindest einer verhärteten Schicht aufweisen, wobei die Vorrichtung eine Schäleinrichtung zum Abtrennen der Hüllen von den Körpern aufweist, ist erfindungsgemäß vorgesehen, dass die Schäleinrichtung wenigstens einen Schallwandler aufweist, mittels welchem ein Schallfeld mit Schallwellen in einem Medium, mit welchem zusammen sich die Gliederfüßer in einem Becken der Schäleinrichtung befinden, derart erzeugbar ist, dass mittels der Schallwellen die Hüllen aufgesprengt und von den Körpern abgetrennt werden.

Die Erfindung macht sich zunutze, dass Gliederfüßer in ihrer den Körper umgebenden Hülle eine zwar kalkhaltige, jedoch kalkarme Mittelschicht aufweisen, welche auch Mittelhaut genannt wird und einen hohen Anteil an Chitin aufweist. Insbesondere aufgrund des Chitins ist es möglich, mit Hilfe von Schallwellen die Hüllen der Gliederfüßer aufzusprengen und dadurch von den Körpern abzutrennen. Das erfindungsgemäße Schälen erfolgt ohne Kontakt mit Messern oder ähnlichen mechanischen Schäleinrichtungen, die ansonsten verdrecken oder stumpf werden können. Ein Säubern und Schärfen derartiger mechanischer Schäleinrichtungen ist somit Dank der Erfindung vermieden. Dank der Erfindung wird von vornherein ein hoher Hygienestandard gewährleistet. Die zu schälenden Gliederfüßer können wahlweise frisch vom Kutter kommen oder bereits gefroren sein und wahlweise vorgekocht sein. Durch die Verarbeitung frischer Gliederfüßer kann der Einsatz von Konservierungsmitteln verringert werden, was den Geschmack verbessert und mögliche gesundheitliche Risiken, die beim Verzehr von Konservierungsmitteln entstehen können, verringert.

Die Schallwellen sind insbesondere Ultraschallwellen in einem Bereich zwischen 16 kHz oder 20 kHz bis 1,6 GHz. Weiter sind unter den Schallwellen auch Druckwellen ab einer Frequenz von 2 Hz zu verstehen. Eine Obergrenze für die gemäß möglichen Ausführungsformen der Erfindung erzeugten Schallwellen liegt bei etwa 50 MHz. Die Erzeugung der Schallwellen erfolgt piezoelektrisch, hydraulisch oder mechanisch. Besonders bevorzugt weisen die Schallwellen mehrere unterschiedliche Frequenzen auf, wobei die Schallwellen mit diesen Frequenzen nacheinander erzeugt werden. Es wird somit wenigstens ein Frequenzbereich durchlaufen. Je nach Beschaffenheit der jeweiligen Hülle, also der Dicke, der Härte oder der Größe, sprengt diese Hülle bei einer anderen Frequenz auf.

Vorzugsweise umfasst der wenigstens eine Schallwandler mehrere Schallwandler, welche jeweils einen von mehreren vorzugsweise mindesten teilweise unterschiedlichen Frequenzbereichen abdecken. Die unterschiedlichen Frequenzbereiche schließen dabei bevorzugt aneinander an oder sind in Randbereichen der Frequenzbereiche auch deckungsgleich, damit lückenlos alle vorgesehenen Frequenzen in einem größeren Frequenzbereich durchlaufen werden können. Beim Einsatz von mehreren Schallwandlern die jeweils nur in einem kleinen Frequenzbereich Schallwellen erzeugen müssen, kann jeder dieser Schallwandler vergleichsweise kostengünstig hergestellt werden. Vorzugsweise sind für gleiche Frequenzbereiche mehrere Schallwandler vorgesehen, die parallel betrieben werden. Dadurch kann ein gleichmäßiges Schallfeld generiert werden, welches vorteilhafter Gliederfüßer in allen Teilen des Beckens erreicht. Der Einsatz von mehreren Schallwandlern, insbesondere Ultraschallerzeugern, hat außerdem Kostenvorteile, da bei mehreren Schallwandlern, die in einem gleichen Frequenzbereich wirken, jeder Schallwandler nur mit vergleichsweise geringerer Energie Schallwellen erzeugen muss.

Vorzugsweise ist jedem Schallwandler ein Generator zugeordnet, der den jeweiligen Schallwandler ansteuert. Der Generator oder jeder Generator steuert entweder genau einen Schallwandler oder mehrere Schallwandler an. Der Schallwandler wird dabei bevorzugt von dem jeweils zugeordneten Generator derart angesteuert, dass der jeweilige Schallwandler während jedes Schälvorganges einen Frequenzbereich mehrfach durchläuft. Dadurch wird sichergestellt, dass tatsächlich alle Hüllen aufgesprengt werden.

Vorteilhafterweise weist die Vorrichtung eine Durchmischeinrichtung auf, welche die Gliederfüßer während des Schälens durchmischt. Insbesondere in Verbindung mit dem mehrfachen Durchlaufen des Frequenzbereiches wird dadurch besonders vorteilhaft sichergestellt, dass alle Gliederfüßer den Schallwellen derart ausgesetzt werden, dass die Hüllen aufgesprengt werden. Ansonsten würden in oberen Schichten angeordnete Gliederfüßer den Schallwellen möglicherweise so viel Energie entziehen, dass diese Energie nicht mehr zum Aufsprengen der Hüllen von Gliederfüßern in darunterliegenden Schichten ausreichen würde. Die Durchmischeinrichtung ist insbesondere als Rührgerät ausgebildet, welches die Gliederfüßer durcheinander wirbelt und dadurch ermöglicht, dass die Schallwellen jeden Gliederfüßer mit ausreichender Energie erreichen.

Das Medium, welches in dem Becken angeordnet ist und die Gliederfüßer beim Schälen umgibt, ist vorzugsweise eine Flüssigkeit, insbesondere Wasser. Das Schälen findet somit insbesondere in einem Wasserbad statt. Flüssigkeit und insbesondere Wasser ist dazu geeignet, die Energie der Schallwellen bei nur geringen Energieverlusten zu übertragen.

Alternativ ist das Medium ein Gas, insbesondere Lebensmittelgas. Der Einsatz von Gas anstelle von Flüssigkeit hat den Vorteil, dass die Gliederfüßer nicht verwässern und die abgetrennten Hüllen auf hygienisch besonders vorteilhafte Weise von den Körpern getrennt werden können.

Bei einer vorteilhaften Ausführungsform der Erfindung ist vorgesehen, dass das Medium, insbesondere die Flüssigkeit, vor jedem Schälvorgang durch einen Zulauf in das Becken eingelassen wird. Dadurch startet jeder Schälvorgang in sauberem Medium. Nach dem Schälvorgang wird vorzugsweise das mit Schalenresten der Hüllen verunreinigte Medium durch einen Ablauf wieder aus dem Becken abgelassen. Der Ablauf ist insbesondere eine in das Becken integrierte und sich automatisch öffnende Klappe. Bei einer alternativen Ausführungsform der Erfindung ist vorgesehen, dass das Medium während des Schälvorganges fortlaufend durch den Zulauf in das Becken eingelassen wird, das Becken durchläuft und durch den Ablauf wieder aus dem Becken abgelassen wird. Dadurch findet in vorteilhafter Weise fortwährend ein Abtransport von Schalenresten mit Hilfe des Mediums, welches aus dem Becken abgelassen wird, statt. Vorzugsweise wird der wenigstens eine Schallwandler, insbesondere mittels einer Hebevorrichtung, vor dem Schälen in das Becken eingefahren und nach dem Schälen wieder aus dem Becken herausgefahren.

Bei einer besonders vorteilhaften Ausführungsform der Erfindung ist vorgesehen, dass die Vorrichtung eine Reinigungsanlage aufweist. Das durch das Schälen verunreinigte Medium wird verfahrensgemäß nach dem Verlassen des Beckens zumindest teilweise der Reinigungsanlage zugeführt und mittels der Reinigungsanlage gereinigt. Weiter wird verfahrensgemäß bei dieser Ausführungsform das gereinigte Medium zumindest teilweise, insbesondere vermischt mit frischem Medium, wieder in das Becken eingelassen. Dies erfolgt, wie zuvor beschrieben, entweder vor jedem Schälvorgang oder fortlaufend auch während des Schälvorganges. Dank der Reinigungsanlage kann der Einsatz von Medium, insbesondere Flüssigkeit, stark begrenzt werden, was aus Umweltgründen vorteilhaft ist.

Vorzugsweise wird der feste Inhalt des Beckens, insbesondere Körper und Schalenreste von Hüllen, nach jedem Schälvorgang dem Becken entnommen und zum Abtropfen lassen von Flüssigkeit einer Abtropfeinrichtung, insbesondere einem Siebblech, zugeführt. Die Vorrichtung weist entsprechend vorzugsweise diese Abtropfeinrichtung auf. Die Abtropfeinrichtung weist vorzugsweise ein Gefälle auf, so dass die Körper und Schalenreste der Gliederfüßer an der Abtropfeinrichtung herunterrutschen und dabei anhaftendes Medium abtropfen kann. Alternativ ist die Abtropfeinrichtung als Förderband ausgebildet, welches vorzugsweise eine siebartige Struktur aufweist. Weiter weist die Abtropfeinrichtung vorzugsweise Seitenwände auf, welche einem seitlichen Abfallen der Körper und Schalenreste der Hüllen von der Abtropfeinrichtung entgegenwirken.

Gemäß einer vorteilhaften Ausführungsform der Erfindung weist die Vorrichtung eine Vorsortieranlage auf, welche gemäß einer vorteilhaften Ausführungsform des erfindungsgemäßen Verfahrens die Gliederfüßer vor dem Schälen nach Größe in mindestens zwei Gruppen von Gliederfüßern sortiert. Die Schäleinrichtung füllt nachfolgend für jeden Schälvorgang jeweils nur Gliederfüßer aus einer dieser Gruppen in das Becken ein. Alle während eines Schälvorgangs im Becken befindlichen Gliederfüßer sind sich somit zumindest grob einander ähnlich, so dass die Hüllen bei ähnlichen Frequenzen aufgesprengt werden können und die Körper in einem ungefähr definierten Größenbereich vorsortiert in den Handel weitergegeben werden können. Bei einer weiteren vorteilhaften Ausführungsform der Erfindung ist vorgesehen, dass die erfindungsgemäße Vorrichtung eine Nachsortieranlage aufweist, welche verfahrensgemäß die Körper und Schalenreste der Hüllen separat voneinander aus dem nach dem jeweiligen Schälvorgang im Becken verbliebenen festen Inhalt des Beckens aussortiert. Die Nachsortieranlage trennt somit die Körper von dem weiteren festen Inhalt, welcher nach dem Schälvorgang im Becken verblieben ist. Die Körper werden für den Verzehr weiterverarbeitet, insbesondere verpackt. Die Schalenreste werden vorzugsweise gesammelt und für die Gewinnung von Chitin weiterverarbeitet. Chitin wird beispielsweise in der Medizintechnik für Medikamente und in der Industrie für Lösungsmittel benötigt.

Weitere Ausführungsformen ergeben sich aus den Ansprüchen, aus den Zeichnungen und aus der nachfolgenden Beschreibung eines in den Zeichnungen dargestellten Ausführungsbeispiels der Erfindung. In der Zeichnung zeigt:

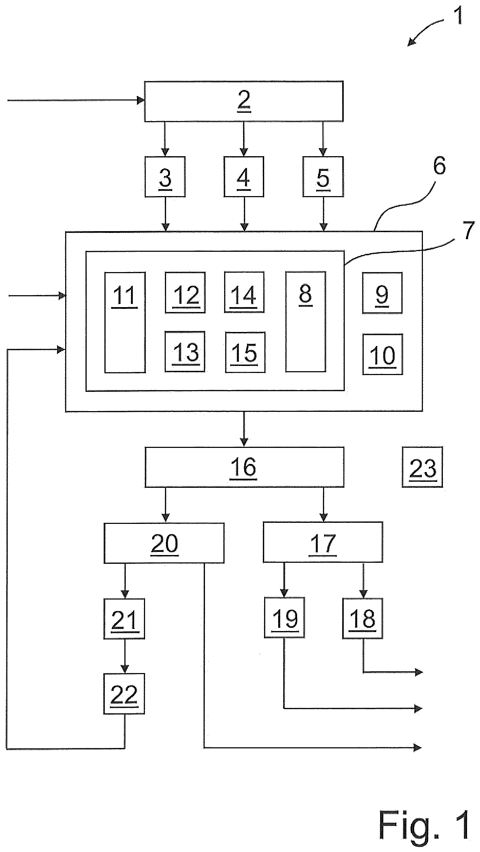

- Fig. 1:: eine erfindungsgemäße Vorrichtung zum maschinellen Schälen von Gliederfüßern gemäß einem Ausführungsbeispiel der Erfindung in vereinfachter schematischer Darstellung.

In Fig. 1 ist schematisch eine Vorrichtung zum maschinellen Schälen von Gliederfüßern dargestellt und mit dem Bezugszeichen 1 bezeichnet. Die Gliederfüßer sind insbesondere Krabben, die vorzugsweise vorgekocht frisch von einem Kutter angeliefert werden, alternativ jedoch auch bereits eingefroren sein können. Die Vorrichtung 1 wird nachfolgend am Beispiel von Krabben als zu schälende Gliederfüßer beschrieben. Alternativ können jedoch auch andere Gliederfüßer, wie beispielsweise Insekten, mittels der Vorrichtung 1 und mittels des erfindungsgemäßen Verfahrens geschält werden.

Die Krabben werden zunächst, symbolisiert durch einen Pfeil, einer optionalen Vorsortieranlage 2 zugeführt. Die Vorsortieranlage 2 sortiert die Krabben nach ihren Eigenschaften, bevorzugt und hauptsächlich zumindest nach ihrer Größe. Beispielhaft wird jede Krabbe in eine Gruppe von drei Gruppen unterschiedlicher Größe einsortiert. Alle Krabben einer ersten Gruppe werden in einen ersten Vorratsbehälter 3 gefüllt, alle Krabben einer zweiten Gruppe werden in einen zweiten Vorratsbehälter 4 gefüllt und alle Krabben einer dritten Gruppe werden in einen dritten Vorratsbehälter 5 gefüllt. Die Weiterverarbeitung erfolgt in einer Schäleinrichtung 6, wobei für jeden Schälvorgang jeweils nur Krabben aus einem der Vorratsbehälter 3, 4 und 5 in ein Becken 7 der Schäleinrichtung 6 gefüllt werden. Die Schäleinrichtung 6 weist einen Schallwandler 8 auf, welcher als Ultraschallerzeuger ausgebildet ist, von einer Hebeeinrichtung 9 in das Becken 7 eingefahren und wieder aus dem Becken 7 herausgefahren werden kann und von einem Generator 10 der Schäleinrichtung 6 angesteuert wird. Der Schallwandler 8 ist alternativ eine am Rand des Beckens 7 fest installierte Schwingplatte oder in das Becken 7 integriert, welches hierbei als Schwingwanne ausgebildet ist. Anstelle des einen Schallwandlers 8 sind bei alternativen Ausführungsbeispielen mehrere Schallwandler vorgesehen, welche im gleichen Frequenzbereich oder in verschiedenen Frequenzbereichen arbeiten. Die abgestrahlten Frequenzen liegen im Bereich von 2 Hz bis 50 MHz. Der Generator 10 steuert den Schallwandler 8 derart an, dass der Frequenzbereich, in welchem der Schallwandler 8 arbeitet, mehrmals nacheinander durchlaufen wird. Der Schälvorgang findet in einem Wasserbad statt. Das Becken 7 wird daher vor dem Schälvorgang durch einen Zulauf 11 mit Wasser gefüllt. Optional wird der Wasserstand im Becken 7 mittels eines oberen Sensors 12 und eines unteren Sensors 13 überwacht. Insbesondere kann so überwacht werden, ob das Becken 7 vollständig gefüllt oder vollständig entleert ist.

Während des Schälvorganges werden die Krabben mittels einer Durchmischeinrichtung 14 in Form eines Rührwerkes durcheinander gewirbelt, so dass jede Krabbe einem vom Schallwandler 8 erzeugten Schallfeld derart ausgesetzt wird, dass die Hülle der Krabbe aufgesprengt wird und vom Körper der Krabbe abgetrennt wird. Im Wasser des Beckens 7 verbleiben nach dem Schälvorgang die unversehrten Körper der Krabben sowie Schalenreste der aufgesprengten Hüllen als feste Teile. Das Wasser mit den festen Teilen wird durch einen Ablauf 15 aus dem Becken 7 abgelassen und einer Abtropfeinrichtung 16 in Form eines Siebbleches mit einem Rand zugeführt. Die weitgehend von Wasser befreiten Körper der Krabben und zumindest die gröberen Schalenreste der aufgesprengten Hüllen werden nachfolgend einer Nachsortieranlage 17 zugeführt, welche die Körper in einen vierten Vorratsbehälter 18 und die Schalenreste in einen fünften Vorratsbehälter 19 einsortiert. Die im vierten Vorratsbehälter 18 gesammelten Körper, also die geschälten Krabben, können in den Handel gegeben werden und hierfür beispielsweise verpackt werden. Die im fünften Vorratsbehälter 19 gesammelten Schalenreste der Krabben können beispielsweise für die Gewinnung von Chitin in der Industrie genutzt werden.

Das aus Becken 7 abgelassene und durch die Abtropfeinrichtung 16 getropfte verunreinigte Wasser wird vorzugsweise zumindest teilweise aufbereitet und für einen nachfolgenden Schälvorgang verwendet. Hierfür ist eine als Filter ausgebildete Reinigungsanlage 20 vorgesehen, von welchem Verunreinigungen im Wasser herausgefiltert und in fester Form abgeschieden oder in verunreinigtem Wasser, symbolisiert durch einen Pfeil, abgeführt werden können. Das somit zumindest grob gereinigte Wasser wird in einen Wasservorratsbehälter 21 geleitet und dort zwischengelagert. Zum Auffüllen des Beckens 7 mit Wasser pumpt eine Pumpe 22 das gereinigte Wasser aus dem Wasservorratsbehälter 21 in das Becken 7. Insbesondere wenn das Becken 7 mit dem gereinigten Wasser nicht vollständig gefüllt werden kann, wird zum Füllen des Beckens 7 für einen Schälvorgang zusätzlich Frischwasser, symbolisiert durch einen weiteren Pfeil, durch den Zulauf 11 in das Becken 7 eingeleitet.

Wenigstens eine Steuerung 23 steuert den Verfahrensablauf vollautomatisch. Insbesondere steuert die Steuerung 23 das Auffüllen des Beckens 7 vor einem Schälvorgang bis zu einem definierten Füllstand, der mittels des oberen Sensors 12 detektiert wird, und das Ablassen des Inhalts des Beckens 7 nach dem Schälvorgang durch den Ablauf 15, insbesondere bis mittels des optionalen unteren Sensors 13 detektiert wird, dass das Becken 7 entleert ist. Bei einer Weiterbildung schließt sich an das Ablassen des Inhaltes des Beckens 7 ein Spülvorgang an.

Weiter steuert die Steuerung 23 den Betrieb des Schallwandlers 8 mittels des Generators 10 sowie den Betrieb der Hubeinrichtung 9 und vorzugsweise auch der Vorsortieranlage 17, der Reinigungsanlage 20, der Pumpe 22 sowie das Schalten des Zulaufs 11 und des Ablaufs 15 sowie gegebenenfalls weitere Fördereinrichtungen sowie gegebenenfalls Absperrvorrichtungen wie Klappen oder Ventile, mittels welchen ein Weitertransport der Krabben oder fester Teile der Krabben oder ein Weiterleiten des Wassers unterbrochen werden kann.

Alle in der vorstehenden Beschreibung und in den Ansprüchen genannten Merkmale sind in einer beliebigen Auswahl mit den Merkmalen der unabhängigen Ansprüche kombinierbar. Die Offenbarung der Erfindung ist somit nicht auf die beschriebenen und/oder beanspruchten Merkmalskombinationen beschränkt, vielmehr sind alle im Rahmen der Erfindung sinnvollen Merkmalskombinationen als offenbart zu betrachten.

## Patentansprüche

1. Verfahren zum maschinellen Schälen von Gliederfüßern, insbesondere Krabben, die jeweils einen Körper und eine den Körper umgebende Hülle, insbesondere Cuticular, mit zumindest einer verhärteten Schicht aufweisen, wobei eine Schäleinrichtung (6) die Hüllen von den Körpern abtrennt,
**dadurch gekennzeichnet,**
**dass** wenigstens ein Schallwandler (8) der Schäleinrichtung (6) ein Schallfeld mit Schallwellen in einem Medium, mit welchem zusammen sich die Gliederfüßer in einem Becken (7) befinden, derart erzeugt, dass mittels der Schallwellen die Hüllen aufgesprengt und von den Körpern abgetrennt werden.

2. Verfahren nach Anspruch 1, **dadurch gekennzeichnet, dass** der wenigstens eine Schallwandler (8) mehrere Schallwandler (8) umfasst, welche jeweils einen von mehreren unterschiedlichen Frequenzbereichen abdecken.

3. Verfahren nach einem der vorherigen Ansprüche, **dadurch gekennzeichnet, dass** jeder Schallwandler (8) von einem jeweils zugeordneten Generator (10) derart angesteuert wird, dass der jeweilige Schallwandler (8) während jedes Schälvorganges einen Frequenzbereich mehrfach durchläuft.

4. Verfahren nach einem der vorherigen Ansprüche, **dadurch gekennzeichnet, dass** eine Durchmischeinrichtung (14) die Gliederfüßer während des Schälens durchmischt.

5. Verfahren nach einem der vorherigen Ansprüche, **dadurch gekennzeichnet, dass** das Medium eine Flüssigkeit, insbesondere Wasser oder ein Gas, insbesondere Lebensmittelgas, ist.

6. Verfahren nach einem der vorherigen Ansprüche, **dadurch gekennzeichnet, dass** das Medium vor jedem Schälvorgang durch einen Zulauf (11) in das Becken (7) eingelassen wird und nach jedem Schälvorgang durch einen Ablauf (15) wieder aus dem Becken (7) abgelassen wird.

7. Verfahren nach einem der Ansprüche 1 bis 6, **dadurch gekennzeichnet, dass** das Medium während des Schälvorganges fortlaufend durch einen Zulauf (11) in das Becken (7) eingelassen wird, das Becken (7) durchläuft und durch einen Ablauf (15) wieder aus dem Becken (7) abgelassen wird.

8. Verfahren nach einem der vorherigen Ansprüche, **dadurch gekennzeichnet, dass** das durch das Schälen verunreinigte Medium nach dem Verlassen des Beckens (7) zumindest teilweise einer Reinigungsanlage (20) zugeführt und mittels der Reinigungsanlage (20) gereinigt wird und dass das gereinigte Medium zumindest teilweise, insbesondere vermischt mit frischem Medium, wieder in das Becken (7) eingelassen wird.

9. Verfahren nach einem der vorherigen Ansprüche, **dadurch gekennzeichnet, dass** der feste Inhalt des Beckens (7), insbesondere Körper und Schalenreste von Hüllen, nach jedem Schälvorgang dem Becken (7) entnommen und zum Abtropfen lassen von Flüssigkeit einer Abtropfeinrichtung (16), insbesondere einem Siebblech, zugeführt wird.

10. Verfahren nach einem der vorherigen Ansprüche, **dadurch gekennzeichnet, dass** eine Vorsortieranlage (2) die Gliederfüßer vor dem Schälen nach Größe in mindestens zwei Gruppen von Gliederfüßern sortiert und dass die Schäleinrichtung (6) für jeden Schälvorgang jeweils nur Gliederfüßer aus einer dieser Gruppen in das Becken (7) einfüllt.

11. Verfahren nach einem der vorherigen Ansprüche, **dadurch gekennzeichnet, dass** eine Nachsortieranlage (17) die Körper und Schalenreste der Hüllen separat voneinander aus dem nach dem jeweiligen Schälvorgang im Becken (7) verbliebenen festen Inhalt des Beckens (7) aussortiert.

12. Vorrichtung zum maschinellen Schälen von Gliederfüßern, insbesondere Krabben, die jeweils einen Körper und eine den Körper umgebende Hülle, insbesondere Cuticular, mit zumindest einer verhärteten Schicht aufweisen, wobei die Vorrichtung (1) eine Schäleinrichtung (6) zum Abtrennen der Hüllen von den Körpern aufweist,
**dadurch gekennzeichnet,**
**dass** die Schäleinrichtung (6) wenigstens einen Schallwandler (8) aufweist, mittels welchem ein Schallfeld mit Schallwellen in einem Medium, mit welchem zusammen sich die Gliederfüßer in einem Becken (7) der Schäleinrichtung (6) befinden, derart erzeugbar ist, dass mittels der Schallwellen die Hüllen aufgesprengt und von den Körpern abgetrennt werden.

13. Vorrichtung nach Anspruch 12, **dadurch gekennzeichnet, dass** die Vorrichtung (1) Mittel zur Durchführung des Verfahrens nach einem der Ansprüche 1 bis 11 aufweist.
